# EUROPÄISCHE PATENTANMELDUNG

(11) **EP 0 623 286 A1**
(43) Veröffentlichungstag der Anmeldung: **09.11.1994**
(21) Anmeldenummer: 94106787.8
(22) Anmeldetag: 30.04.1994
(51) Int. Cl.: A23G 1/20, A23G 3/02

(54) **Spender zum Giessen von Schokoladenmasse oder dgl.**

(30) Priorität: 05.05.1993 DE 4314753
(71) Anmelder: WINKLER & DÜNNEBIER MASCHINENFABRIK UND EISENGIESSEREI KG, D-56564 Neuwied (DE)
(72) Erfinder: Rüegg, Hanno, CH-8280 Kreuzlingen (CH); Zauter, Georgi, Dipl.-Ing., D-56203 Höhr-Grenzhausen (DE)

(57) **Zusammenfassung**

Die Erfindung betrifft eine Vorrichtung zum Gießen von Schokoladenmasse oder dgl. mit einer Vielzahl von Kolben 3, die alle gemeinsam bewegt werden und dabei über einen Steuerschieber 7' gesteuert, im Ansaughub aus einem Vorrat Schokoladenmasse ansaugen und diese im Ausschiebehub einer Düsenplatte 10' zuführen. Nicht für alle Kolben ist in der Düsenplatte 10' eine Austrittsdüse vorgesehen. Die Erfindung stellt sich die Aufgabe, einen möglichst einfachen Weg zur Rückführung der nicht an eine Austrittsdüse 11 herangeführten Masse in den Vorratsbehälter aufzuzeigen. Der Kern der erfindungsgemäßen Lösung der Aufgabe liegt darin, den Steuerschieber 7' selbst als Vorratsbehälter zu benutzen. Dadurch wird es möglich, wie in Fig. 11 am Beispiel des zweiten Kolbens von links aufgezeigt, durch einige wenige Rückführöffnungen 20 und 21 in der Unterplatte 13' des Steuerschiebers 7' bzw. des Schieberraumbodens 8' die mit kurzen Rückführkanälen 19 in der Düsenplatte 10' korrespondieren, die Schokoladenmasse über den durch einen Pfeil aufgezeigten Weg in den Steuerschieber 7' zurückzuführen.

## Beschreibung

Die Erfindung betrifft eine Vorrichtung zum Gießen von Schokoladenmasse oder dgl. mit in Dosierzylindern bewegten Kolben, die alle in einem gemeinsamen Saughub, über einen Steuerschieber, Schokoladenmasse aufnehmen und im darauffolgenden Ausschiebehub diese Masse durch den Steuerschieber hindurch einer Düsenplatte zuführen. Die Düsenplatte trägt eine Vielzahl von Düsen, durch die die Masse in die Formvertiefungen von Gießformen eingeleitet wird.

Die Anzahl der Dosierzylinder bzw. der Kolben ist ausgelegt für die maximal in Betracht kommende Anzahl von Formvertiefungen je Gießform. Es kommt jedoch häufig vor, daß weniger Formvertiefungen in einer Gießform enthalten sind. In solchen Fällen ist eine Düsenschiene mit entsprechend geringerer Anzahl von Austrittsdüsen zu verwenden, d.h. die Anzahl der Austrittsdüsen stimmt dann nicht mit der Anzahl der Kolben überein. In solchen Fällen ist es bislang üblich, nur die Kolben anzutreiben, die über eine Austrittsdüse verfügen, die anderen hingegen stillzusetzen. Erreicht wird dies, indem zu jeder Düsenplatte eine entsprechende sogenannte Programmleiste Verwendung findet, deren Aufgabe es ist, aus der Vielzahl der vorhandenen Kolben nur die mit dem Antriebsmechanismus zu verbinden, die mit einer Austrittsdüse in Verbindung stehen.

Nachteilig an dieser Lösung ist es, daß für jede Düsenleiste die entsprechende Programmleiste bereitzuhalten ist. Eine Verwechslung der Leisten führt wegen der zu verarbeitenden inkompressibler Massen unweigerlich zu Maschinenschäden.

Es hat deshalb nicht an Überlegungen gefehlt, wie dieser Nachteil zu vermeiden sei. In der EP-Anmeldung 0 151 211 wird ein Gießverfahren und eine zu seiner Durchführung geeignete Vorrichtung vorgeschlagen, die es gestattet, sämtliche Kolben unabhängig von der gewählten Düsenplatte, in Betrieb zu lassen, d.h. alle Kolben saugen Masse an und schieben sie wieder aus. Dabei schieben die Kolben, die mit einer Austrittsdüse in Verbindung stehen, in gewohnter Weise ihre Masse durch diese Düse in eine der Formvertiefungen. Die anderen Kolben schieben ihre Masse in Sackbohrungen, die in der Düsenplatte eingebracht sind und die über Verbindungsnuten mit einem oder mehreren Sammelkanälen in Verbindung stehen. Von dort wird die Masse über Schlauch- oder Rohrleitungen einem Zwischenspeicher zugeführt und gelangt schließlich über weitere Leitungen zurück in die Gießvorrichtung.

Nachteilig an dieser Lösung ist neben der Verwendung eines separaten Zwischenspeichers vor allem der Umstand, daß von jedem Sackloch ausgehend eine Nut zu einem der Sammelkanäle geführt werden muß. Es ist dadurch nicht jede beliebige Konstellation der Austrittsdüsen möglich, häufig ist ein komplizierter, kurviger Verlauf der Nuten erforderlich. Diese im Ansatz gute Lösung des eingangs geschilderten Problems hat sich deshalb nicht durchzusetzen vermocht.

Aufgabe der Erfindung ist daher die Schaffung einer Vorrichtung zum Gießen von Schokoladenmasse, die es gestattet, sämtliche Kolben, unabhängig von der gewählten Düsenplatte, in Betrieb zu lassen, ohne dabei einen separaten Zwischenspeicher, zusätzliche Leitungen, Sammelkanäle und insbesondere ohne Nuten zu benötigen, die zu weit entfernten Sammelkanälen führen.

Gelöst wird diese Aufgabe der Erfindung dadurch, daß der Steuerschieber auf seiner den Dosierzylindern zugewandten Seite für jeden Dosierzylinder eine Ansaugbohrung sowie eine Eingangsbohrung zu einer Durchtrittshülse, auf der zur Düsenplatte weisenden Seite die Austrittsbohrungen der Durchtrittshülsen sowie Rückführöffnungen aufweist und daß die Düsenplatte für jeden Dosierzylinder eine Eintrittsbohrung aufweist, die entweder zu einer Austrittsdüse führt oder mit einem Rückführkanal in Verbindung steht, der mit einer der Rückführöffnungen im Steuerschieber korrespondiert.

Vorteilhaft an dieser Lösung ist nicht nur, daß der Austausch der Programmleiste bei Wechsel der Düsenplatte entfällt, sondern auch, da bei dieser Ausgestaltung der Gießvorrichtung der Steuerschieber selbst die Funktion eines Speichers übernimmt, daß die bei der Vorrichtung nach der EP-Anmeldung 0 151 211 bemängelte Rohrleitungen, Zwischenspeicher, Sammelkanäle und u.U. kurvig zu führenden Nuten entfallen.

Weitere Merkmale der Erfindung gehen aus den Unteransprüchen sowie aus der Beschreibung eines in der schematischen Zeichnung dargestellten bevorzugten Ausführungsbeispiels hervor.

In der Zeichnung zeigen:
Fig. 1 Einen Querschnitt durch eine Gießeinrichtung nach dem Stand der Technik gegen Ende des Saughubs mit angehobenen Kolben und weitgehend gefüllten Dosierzylindern.
Fig. 2 Einen Querschnitt durch eine Gießvorrichtung nach dem Stand der Technik gegen Ende des Ausschiebehubes mit abgesenkten Kolben und weitgehend entleerten Dosierzylindern.
Fig. 3 Einen Längsschnitt durch eine Gießeinrichtung nach dem Stand der Technik mit der in Fig. 1 gezeigten Stellung der Kolben.
Fig. 4 Einen Längsschnitt durch eine Gießeinrichtung nach dem Stand der Technik mit der in Fig. 2 gezeigten Stellung der Kolben.
Fig. 5 Eine Draufsicht auf einen Steuerschieber nach dem Stand der Technik.
Fig. 6 Eine Draufsicht auf einen Schieberraumboden nach dem Stand der Technik.
Fig. 7 Draufsicht auf einen Steuerschieber gemäß der Erfindung.
Fig. 8 Draufsicht auf einen Schieberraumboden gemäß der Erfindung.
Fig. 9 Düsenplatte gemäß der Erfindung mit 3 Reihen von Düsen für 4 Reihen von Dosierzylindern.
Fig. 10 Einen Querschnitt durch eine erfindungsgemäße Gießvorrichtung gegen Ende des Saughubes.
Fig. 11 Einen Querschnitt durch eine erfindungsgemäße Gießvorrichtung gegen Ende des Ausschiebehubes.
Fig. 12 Einen Querschnitt durch einen erfindungsgemäßen Steuerschieber gemäß der Linie XII-XII in Fig. 7.

Um die Besonderheiten der erfindungsgemäßen Gießeinrichtung zu veranschaulichen, sei zunächst auf eine Gießeinrichtung nach dem Stand der Technik eingegangen. Vorab sei bemerkt, daß solche Einrichtungen über sehr viele Kolben verfügen, üblich sind etwa 10 Reihen von jeweils 15 bis 20 Kolben. Der Übersichtlichkeit halber ist hier jedoch eine Gießeinrichtung mit nur vier Reihen von je fünf Kolben zeichnerisch dargestellt.

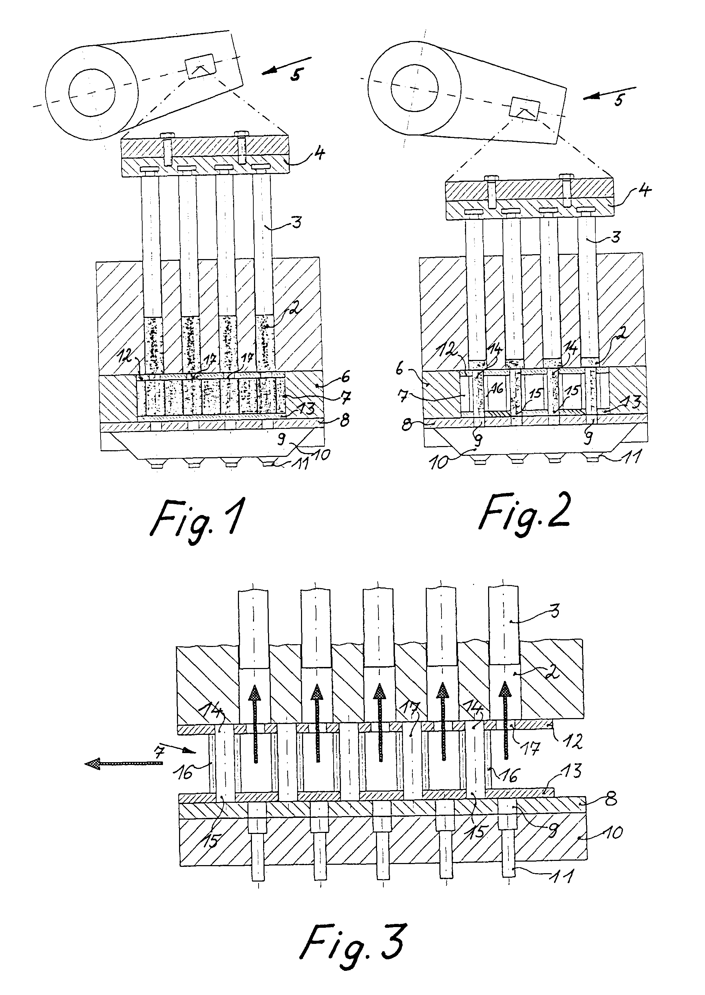

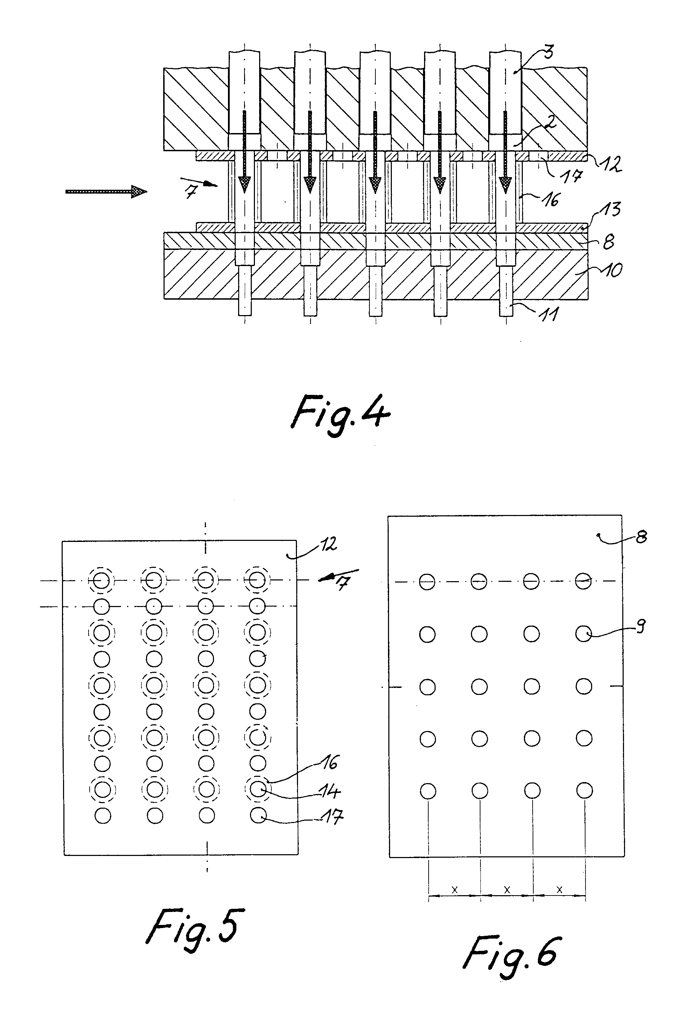

Die Fig. 1 und 2 zeigen einen Querschnitt durch solch eine vereinfachte Einrichtung nach dem Stand der Technik. Sie besteht im wesentlichen aus einem Kolbenblock 1 mit darin eingearbeiteten Dosierzylindern 2, in denen Kolben 3 eingeführt sind. Diese Kolben 3 sind in einer sogenannten Programmleiste 4 eingehängt, die über einen hier nicht weiter interessierenden Mechanismus 5 um den Kolbenhub auf und ab bewegt wird. Die Dosierzylinder 2 münden in einen Schieberraum 6 ein, in der ein Steuerschieber 7 in die Zeichnungsebene hinein verschiebbar gelagert ist. Die Unterseite des Schieberraumes 6 ist durch einen Schieberraumboden 8 abgeschlossen, der, wie insbesondere in Fig. 6 ersichtlich, Bohrungen 9 aufweist, die an Zahl und Lage zueinander der Anordnung der Dosierzylinder entspricht, und die sich genau senkrecht unterhalb der Dosierzylinder 2 befinden. Zuunterst ist eine Düsenplatte 10 mit in Durchgangsbohrungen eingesetzten Austrittsdüsen 11 angeordnet. Diese Düsenplatte 10 ist austauschbar und kann Austrittsdüsen 11 in unterschiedlicher Zahl und Anordnung aufweisen. Im hier gewählten Beispiel entsprechen die Düsen in Zahl und Lage den Dosierzylindern 2 und befinden sich genau senkrecht unterhalb der Bohrungen 9 im Schieberraumboden 8. Der bereits kurz angesprochene Steuerschieber 7 besteht aus einer Oberplatte 12 und einer Unterplatte 13, in denen im gleichen Raster, wie die Dosierzylinder 2 Bohrungen 14 und 15 angebracht sind, zwischen denen sich rohrförmige Durchtrittshülsen 16 erstrecken. Um die Hubbewegung des Steuerschiebers 7 von den Bohrungen versetzt befinden sich, wiederum im Raster der Dosierzylinder 2 eingebracht, Ansaugbohrung 17 in der Oberplatte 12. Gelangen die Durchtrittshülsen 16 mit ihren Bohrungen 14 und 15 in der Ausschiebestellung des Steuerschiebers 7 unter die Dosierzylinder 2, so können die Kolben 3, wie in Fig. 2 dargestellt, die von ihnen zuvor angesaugte Schokoladenmasse durch den Steuerschieber 7, d.h. durch die Bohrungen 14, die Durchtrittshülsen 16, die Bohrungen 15, weiter durch die Bohrungen 9 des Schieberraumbodens 8 und von dort durch die Düsenplatte 10 bzw. die Austrittsdüsen 11 in hier nicht dargestellte Formvertiefungen drücken. Nach Abschluß der Ausschiebebewegung der Kolben 3 wird der Steuerschieber in die sog. Ansaugstellung verschoben. Nunmehr sind die Bohrungen 15 in der Unterplatte 13 durch den Schieberraumboden 8 verschlossen. Gleichzeitig kommen die in der Oberplatte 12 angebrachten Ansaugbohrungen 17 unter den Dosierzylindern 2, wie in Fig. 1 dargestellt, zu stehen. Die nunmehr in Aufwärtsbewegung, d.h. in ihrem Ansaughub befindlichen Kolben 3 saugen durch die Ansaugbohrungen 17 hindurch Schokoladenmasseaus dem Steuerschieber 7 auf. Der in Steuerschieber 7 vorhandene Vorrat an Schokoladenmasse wird dabei über hier nicht dargestellte Zuleitungen ergänzt.

In den Fig. 3 und 4 sind die hier besonders interessierenden Teile nochmals im Längsschnitt dargestellt. Die Steuerschieberbewegung erfolgt hier, wie durch Pfeile angedeutet, in der Zeichenebene. Die Fig. 3 zeigt den zuletzt geschilderten Zustand, d.h. die Kolben 3 befinden sich in der Ansaugbewegung und der Steuerschieber 7 steht nach links verschoben mit seinen in der Oberplatte 12 angebrachten Ansaugbohrungen 14 genau unter den Dosierzylindern 2. In der Fig. 4 haben sich die Verhältnisse wieder geändert. Steuerschieber 7 ist nach rechts in die Ausschiebestellung verschoben worden und befindet sich mit seinen Bohrungen 14, 15 bzw. mit seinen Durchtrittshülsen 16 unter den Dosierzylindern 2. Die nunmehr in Ausschiebebewegung befindlichen Kolben 3 drücken die in den Dosierzylindern 2 befindliche Schokoladenmasse, wie bereits geschildert, in die Formvertiefungen.

Findet bei einer solchen Gießeinrichtung nach dem Stand der Technik eine Düsenplatte 10' Verwendung, die weniger Düsen 11 aufweist als Dosierzylinder 2 bzw. Kolben 3 vorhanden sind, so saugen die Kolben, denen keine Düse zugeordnet ist, wohl Masse an, können diese aber nicht ausschieben. Diese Kolben sind also zwingend stillzusetzen.

Anders bei der Gießeinrichtung nach der Erfindung. Durch einige wenige Kanäle in der Gießplatte, im Schieberraumboden und in der Unterplatte des Steuerschiebers wird während der Ausschiebephase eine Verbindung zwischen den Dosierzylindern 2, deren Masse nicht benötigt wird, und dem ohnehin als Massespeicher benutzten Steuerschieber, geschaffen.

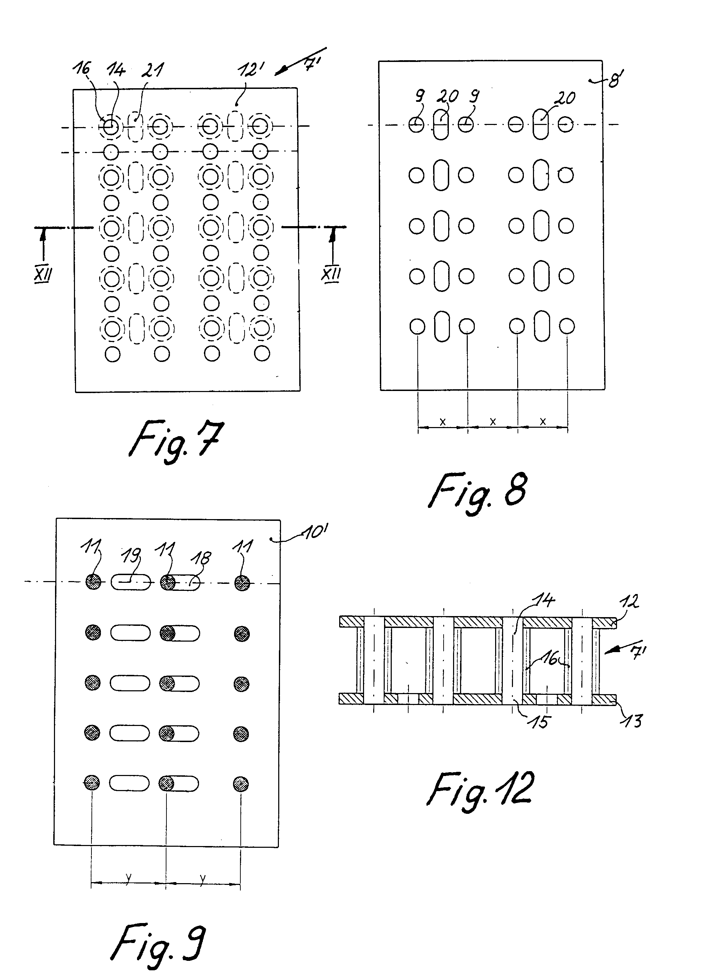

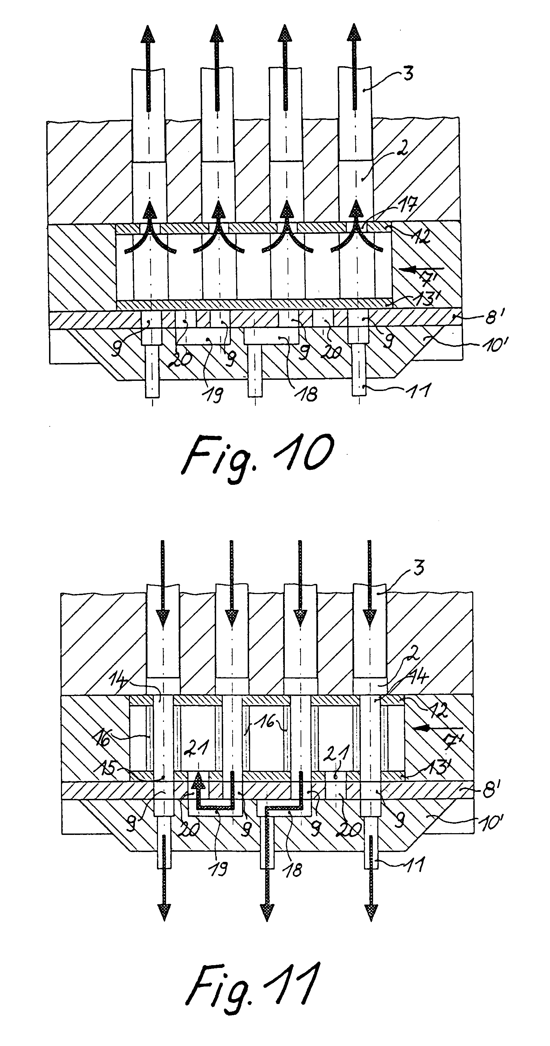

Im nachfolgend näher geschilderten Ausführungsbeispiel einer erfindungsgemäßen Gießeinrichtung wird wieder von vier Reihen von Kolben 3 bzw. Dosierzylindern 2 ausgegangen, die einen Abstand x gegeneinander aufweisen. Sie arbeiten auf eine Düsenplatte 10' mit nur drei Reihen von je fünf Düsen, wobei der Reihenabstand hier das Maß y beträgt. In den Fig. 10 und 11 wird dieser unterschiedliche Reihenabstand deutlich. Dargestellt ist in beiden Fällen ein Querschnitt durch die erfindungsgemäße Gießvorrichtung, wobei Fig. 10 die Kolben in Ansaugbewegung, Fig. 11 die Kolben in ihrer Ausschiebebewegung zeigt. Die Anordnung der Reihen von Düsen 11 in der Düsenplatte 10' ist so gewählt, daß sich verschiedene Möglichkeiten der relativen Lage von Dosierzylinder 2 und Austrittsdüse 11 zeigen lassen. So befindet sich exakt unter den äußeren Reihen von Dosierzylindern 2 je eine Reihe von Austrittsdüsen 11. Hier sind keinerlei besondere Maßnahmen erforderlich, um die Schokoladenmasse den Düsen zuzuführen. Anders bei den inneren Reihen von Dosierzylindern. So ist für die rechte Reihe der inneren Dosierzylinder 2 die zugeordnete Reihe von Austrittsdüsen nach links versetzt angeordnet. Die Verbindung zwischen diesen Düsen und den Dosierzylindern läßt sich durch eine schräg durch die Gießplatte 10' geführte Durchgangsbohrung oder, wie im Ausführungsbeispiel gezeigt, durch eine Verbindungsnut 17 herstellen. Schließlich zeigt das Ausführungsbeispiel noch die hier besonders interessierende Möglichkeit, daß für einen Dosierzylinder keine Austrittsdüse vorhanden ist. In diesem Fall ist anstelle einer Durchgangsbohrung oder Verbindungsnut, die zu einer der Austrittsdüsen 11 führt, ein Rückführkanal 18 in die Gießplatte 10' eingearbeitet, der mit noch näher zu erläuternden Rückführöffnungen im Schieberraumboden 8' und in der Unterplatte 13' des Steuerschiebers 7' zusammenwirkt. In Fig. 9 ist die Düsenplatte 10' zur Verdeutlichung gesondert in einer Draufsicht dargestellt. Die zu den Austrittsdüsen 11 führenden Durchgangsbohrungen sind durch Schraffur hervorgehoben. Der Reihenabstand der Düsen ist durch y gekennzeichnet, der Reihenabstand der mit dieser Düsenplatte 10' zusammenwirkenden Dosierzylinder mit x. Wie zu erkennen ist, ist die Lage der Austrittsdüsen 11 bzw. die Länge und Richtung der Verbindungsnuten 18 bzw. der Rückführkanäle 19 so gewählt, daß für jeden Dosierzylinder 2 eine korrespondierende Durchgangsbohrung, Verbindungsnut 18 oder Rückführkanal 19 vorhanden ist. Der Schieberraumboden 8', der in der Fig. 8 in der Draufsicht näher dargestellt ist, unterscheidet sich vom bereits in Zusammenhang mit der Gießvorrichtung nach dem Stand der Technik beschriebenen Schieberraumboden 8 durch zusätzliche Rückführöffnungen 20, die über den Rückführkanälen 19 der Düsenplatte 10' zu liegen kommen. Aus Gründen der einfacheren Fertigung ist dabei jeweils eine Reihe von Rückführöffnungen 20 mittig zwischen zwei Reihen von Durchtrittsöffnungen 9 angebracht. Dadurch kann jede Rückführöffnung 20, die von einer oder beiden ihr benachbarten Durchtrittsbohrungen 9 angelieferter Schokoladenmasse aufnehmen. Dazu ist der Querschnitt der Rückführöffnung 20 entsprechend größer als der Querschnitt der Durchtrittsbohrungen 9 gewählt.

Auch der Steuerschieber 7' weist, wie in einer Draufsicht in Fig. 7 und in Fig. 12 in einer Schnittdarstellung dargestellt, in seiner Unterplatte 13' Rückführöffnungen 21 auf. Diese Rückführöffnungen stimmen in Form, Größe und Lage mit den Rückführöffnungen 20 im Schieberraumboden 8' überein und gelangen mit diesen in der Ausschiebestellung des Steuerschiebers 7' zur Deckung.

Ansonsten entspricht der Steuerschieber 7' dem bereits in Fig. 5 dargestellten Steuerschieber 7 nach dem Stand der Technik.

Die Wirkungsweise der Gießeinrichtung läßt sich recht gut anhand der Schnittdarstellungen in Fig. 10 und 11 erläutern, die zusammen einen vollen Arbeitszyklus zu beschreiben gestatten. Ausgegangen wird von dem in Fig. 11 dargestellten Zeitpunkt. Die Kolben 2 bewegen sich in die durch Pfeile angedeutete Richtung, d.h. sie sind gerade in der Ausschiebephase. Der Steuerschieber 7' befindet sich mit seinen Durchtrittshülsen 16 bzw. den dazugehörigen Eingangs- und Ausgangsbohrungen 14 und 15 zu dieser Zeit exakt unter den Dosierzylindern 2 und damit auch deckungsgleich oberhalb der Durchtrittsöffnungen 9 im Schieberraumboden 8'. Diese wiederum korrespondieren mit den Durchgangsbohrungen, Verbindungsnuten 18 und Rückführkanälen 19 in der Düsenplatte 10'. Der Verlauf der Schokoladenmasse innerhalb der Düsenplatte 10' durch die Durchgangsbohrungen oder Verbindungsnuten 18 braucht hier nicht weiter zu interessieren, da am Ende dieser Wege je eine Austrittsdüse 11 angeordnet ist und die Schokoladenmasse dort in bekannter Weise in eine Formvertiefung eingefüllt wird. Anders hingegen bei der durch die Kolben 2 in der zweiten Reihe von links ausgeschobenen Schokoladenmasse.

Sie wird zwar ebenfalls durch die Durchtrittshülsen 16 des Steuerschiebers 7' und durch die Durchtrittsöffnungen 9 des Schieberraumbodens 8' zu der Düsenplatte 10' geschoben, gelangt dort aber in den Eingangsbereich einer der Rückführkanäle 19. Von dort geht es nicht zu einer Düse 11, sondern ein kurzes Stück im Rückführkanal 19 nach links bis unter eine der Rückführöffnungen 20 des Schieberraumbodens 8'. Diese Rückführöffnung 20 des Schieberraumbodens 8' liegt genau unter einer der Rückführöffnung 21 des Steuerschiebers 7'. Die von Kolben ausgeschobene Masse wird somit, wie auch durch einen Pfeil verdeutlicht, auf ganz kurzem Wege wieder in den Steuerschieber 7' zurückbefördert.

Sobald die Ausschiebebewegung der Kolben 7 beendet ist, kehrt sich deren Bewegungsrichtung um und der Steuerschieber 7' wird in seine Ansaugstellung verschoben. Wie bereits im Zusammenhang mit einer Gießvorrichtung nach dem Stand der Technik erläutert, kommen dadurch die Ausgangsbohrungen 15 der Durchtrittshülsen 16 in der Unterplatte 13' des Steuerschiebers 7' zwischen den Durchtrittsöffnungen 9 des Schieberraumbodens 8' zu stehen und sind verschlossen. Gleichzeitig kommen die in der Oberplatte 12 angebrachten Ansaugbohrungen 17 unter den Dosierzylindern 2 zu stehen und bilden somit für diese einen Verbindungsweg zum Innenraum des Steuerschiebers 7', so daß die aufwärts strebenden Kolben 3 von dort Masse ansaugen und die Dosierzylinder füllen. Haben die Kolben 3 ihren oberen Tatpunkt erreicht, so kehrt sich ihre Bewegungsrichtung um und auch der Steuerschieber 7' nimmt wieder die Ausschiebestellung ein. Es beginnt ein neuer Arbeitszyklus.

## Patentansprüche

1. Vorrichtung zum Gießen von Schokoladenmasse oder dgl. mit in Dosierzylindern bewegten Kolben, die alle in einem gemeinsamen Saughub über einen Steuerschieber Schokoladenmasse aufnehmen und im darauffolgenden Ausschiebehub diese Masse durch den Steuerschieber hindurch einer Düsenplatte zuführen, dadurch gekennzeichnet, daß der Steuerschieber (7') auf seiner, den Dosierzylindern (2) zugewandten Seite, für jeden Dosierzylinder (2) eine Ansaugbohrung (17) sowie eine Eingangsbohrung (14) zu einer Durchtrittshülse (16), auf der zur Düsenplatte (10') weisenden Seite die Austrittsbohrungen (15) der Durchtrittshülsen (16) sowie Rückführöffnungen (21) aufweist und daß die Düsenplatte (10') für jeden Dosierzylinder (2) eine Eintrittsbohrung aufweist, die entweder zu einer Austrittsdüse (11) führt oder mit einem Rückführkanal (19) in Verbindung steht, der mit einer der Rückführöffnungen (21) im Steuerschieber (7') korrespondiert.

2. Vorrichtung nach Anspruch 1, dadurch gekennzeichnet, daß zwischen Steuerschieber (7') und Düsenplatte (10') ein Schieberraumboden (8') angeordnet ist, der Rückführöffnungen (20) aufweist, die mit den Rückführöffnungen (21) des in Ausschiebestellung befindlichen Steuerschiebers (7') zur Deckung gelangen.

3. Vorrichtung nach Anspruch 1, dadurch gekennzeichnet, daß in der Unterplatte (13) des Steuerschiebers (7') für jeweils zwei Reihen von Durchtrittshülsen (16) eine Reihe von Rückführöffnungen (21) angeordnet ist.
